# EUROPÄISCHE PATENTSCHRIFT

(11) **EP 1 769 139 B1**
(45) Veröffentlichungstag und Bekanntmachung des Hinweises auf die Patenterteilung: **29.10.2008**
(21) Anmeldenummer: 05749126.8
(22) Anmeldetag: 02.06.2005
(51) Int. Cl.: F01M 11/12, F01M 11/10, F01M 1/18, F02B 77/08, G01F 23/00, F16N 19/00, F16N 29/04, F02D 41/40

(54) **VERFAHREN ZUM BETREIBEN EINER BRENNKRAFTMASCHINE UND VORRICHTUNG ZUR DURCHFÜHRUNG DES VERFAHRENS**
METHOD FOR OPERATING AN INTERNAL COMBUSTION ENGINE, AND DEVICE FOR CARRYING OUT SAID METHOD
PROCEDE PERMETTANT DE FAIRE FONCTIONNER UN MOTEUR A COMBUSTION INTERNE, ET DISPOSITIF POUR LA MISE EN OEUVRE DE CE PROCEDE

(30) Priorität: 10.07.2004 DE 102004033414
(43) Veröffentlichungstag der Anmeldung: 04.04.2007
(73) Patentinhaber: ROBERT BOSCH GMBH, 70442 Stuttgart (DE)
(72) Erfinder: FORTHMANN, Stefan, 71634 Ludwigsburg (DE)
(86) Internationale Anmeldenummer: PCT/EP2005/052532
(87) Internationale Veröffentlichungsnummer: WO 2006/005649

(56) Entgegenhaltungen:
- EP-A- 1 241 326
- US-A- 4 734 682
- PATENT ABSTRACTS OF JAPAN Bd. 009, Nr. 077 (M-369), 6. April 1985 (1985-04-06) & JP 59 208116 A (NIPPON JIDOSHA BUHIN SOGO KENKYUSHO KK; others: 02), 26. November 1984 (1984-11-26)
- PATENT ABSTRACTS OF JAPAN Bd. 012, Nr. 448 (M-768), 24. November 1988 (1988-11-24) & JP 63 179115 A (MAZDA MOTOR CORP), 23. Juli 1988 (1988-07-23)
- PATENT ABSTRACTS OF JAPAN Bd. 014, Nr. 488 (M-1039), 24. Oktober 1990 (1990-10-24) & JP 02 199212 A (SUZUKI MOTOR CO LTD), 7. August 1990 (1990-08-07)

## Beschreibung

### Stand der Technik

Die Erfindung geht aus von einem Verfahren zum Betreiben einer Brennkraftmaschine, bei dem wenigstens eine Kraftstoff-Nacheinspritzung vorgenommen wird, und einer Vorrichtung zur Durchführung des Verfahrens nach der Gattung der unabhängigen Ansprüche.

Aus der DE 199 06 287 A1 ist ein Verfahren zur Steuerung einer Brennkraftmaschine bekannt geworden, in deren Abgasbereich eine Abgasbehandlungsvorrichtung angeordnet ist, die ein Partikelfilter enthält, das die im Abgas enthaltenen Partikel zurückhält. Zum ordnungsgemäßen Betreiben des Partikelfilters muss der Partikel-Beladungszustand bekannt sein, der indirekt über den am Partikelfilter auftretenden Differenzdruck erfasst werden kann.

Die Regeneration eines Partikelfilters erfolgt durch ein Abbrennen der im Partikelfilter eingelagerten Partikeln, das in einem Temperaturbereich von beispielsweise 500 °C - 650 °C stattfindet.

In der DE 199 06 287 A1 ist ein Verfahren zur Steuerung einer Brennkraftmaschine beschrieben, in deren Abgasbereich ein Partikelfilter angeordnet ist. Wenn der Beladungszustand des Partikelfilters ein vorgegebenes Maß übersteigt, wird eine Regeneration des Partikelfilters eingeleitet. Insbesondere ist vorgesehen, dass zusätzlich Kraftstoff in den Abgasbereich der Brennkraftmaschine gelangen soll, der im Abgasbereich als Brennstoff exotherm reagiert. Der Kraftstoff wird beispielsweise auf der katalytisch wirksamen Oberfläche eines Katalysators oxidiert. Dadurch erhöht sich einerseits die Temperatur des Katalysators und andererseits die Temperatur des hinter dem Katalysator auftretenden Abgasstroms, mit welcher das nachfolgende Partikelfilter beaufschlagt wird. Der Brennstoff gelangt beispielsweise durch Verstellen des Einspritzzeitpunkts des der Brennkraftmaschine zugeführten Kraftstoffs in den Abgasbereich und verbrennt nicht schon im Zylinder.

In der DE 100 56 016 A1 wird ein Verfahren zum Betreiben eines Partikelfilters beschrieben, bei dem ebenfalls Kraftstoff in den Abgasbereich der Brennkraftmaschine eingebracht wird, der zur Beheizung des Partikelfilters im Abgasbereich exotherm reagiert. Die Einbringung des Kraftstoffs erfolgt durch wenigstens eine nichtbrennende Kraftstoff-Nacheinspritzung, die mit dem kurbelwellenwinkel-bezogenen Zeitpunkt, der Dauer der Kraftstoffeinspritzung und des Kraftstoffdrucks beeinflusst werden kann. Die Dauer und der Druck ergeben die Brennstoffmenge pro Nacheinspritzung.

In Abhängigkeit von den Betriebsbedingungen in den Brennräumen der einzelnen Zylindern der Brennkraftmaschine kondensiert der nicht verbrennende Kraftstoff teilweise an den Zylinderwänden und gelangt an den Kolbenringen vorbei in das Kurbelgehäuse. Die Kraftstoff-Nacheinspritzungen können daher zur Ölverdünnung beitragen.

Aus der DE 196 02 599 A1 ist ein Verfahren zur Ölmengenbestimmung einer Brennkraftmaschine bekannt geworden, bei dem der Ölstand mit einem Ölsensor gemessen wird. Das Verfahren ermöglicht es, den Ölstand während des Fahrbetriebs eines Kraftfahrzeugs vergleichsweise genau zu ermitteln.

Der Erfindung liegt die Aufgabe zugrunde, ein Verfahren zum Betreiben einer Brennkraftmaschine, bei dem wenigstens eine Kraftstoff-Nacheinspritzung vorgenommen wird, und eine Vorrichtung zur Durchführung des Verfahrens anzugeben, die ein sicheres Betreiben der Brennkraftmaschine ermöglichen.

Die Aufgabe wird durch die in den unabhängigen Ansprüchen angegebenen Merkmale jeweils gelöst.

### Vorteile der Erfindung

Das erfindungsgemäße Verfahren zum Betreiben der Brennkraftmaschine geht davon aus, dass wenigstens eine Kraftstoff-Nacheinspritzung vorgenommen wird.

Erfindungsgemäß ist vorgesehen, dass wenigstens ein Maß für den Ölstand des Motoröls der Brennkraftmaschine ermittelt wird, dass ein Schwellenwert für den maximal möglichen Ölstand vorgegeben wird und dass bei einem Überschreiten des Schwellenwerts ein Warnsignal bereitgestellt wird. Der maximal mögliche Ölstand kann oberhalb des vom Hersteller festgelegten oberen Ölstands liegen, der im Allgemeinen auf einem Ölmessstab markiert ist.

Die wenigstens eine Kraftstoff-Nacheinspritzung ist beispielsweise vorgesehen, um die Laufruhe und/oder das Emissionsverhalten der Brennkraftmaschine zu beeinflussen.
Die wenigstens eine Kraftstoff-Nacheinspritzung kann zusätzlich oder alternativ vorgesehen sein, um unverbrannten Kraftstoff in den Abgasbereich der Brennkraftmaschine einzutragen, der als Brennstoff zum Beheizen wenigstens einer im Abgasbereich der Brennkraftmaschine angeordneten Abgasbehandlungsvorrichtung oder hilfsweise zur Regeneration eines (NOx-) Speicherkatalysators über die Kohlenwasserstoffe im Abgas verwendet wird.

Ein wesentlicher Vorteil des erfindungsgemäßen Verfahrens ist es, dass das Maß für den Ölstand aus vorhandenen Betriebskenngrößen der Brennkraftmaschine ermittelt werden kann. Ein Sensor ist nicht erforderlich.

Die Kenntnis wenigstens eines Maßes für den Ölstand kann zur Erhöhung der Sicherheit beim Betreiben der Brennkraftmaschine herangezogen werden. Ein Überschreiten des maximal möglichen Ölstands könnte zu einem Ansaugen von Motoröl durch eine Ölentlüftung führen, die das angesaugte Öl zum Ansaugbereich der Brennkraftmaschine transportiert. Das angesaugte Öl kann unter Umständen als der Brennkraftmaschine zusätzlich zugeführter Kraftstoff wirken, den ein Steuergerät nicht berücksichtigen kann. Es könnte eine Drehmomenterhöhung der Brennkraftmaschine oder sogar ein Weiterlaufen der Brennkraftmaschine nach dem Abschalten auftreten, bis das angesaugte Öl aufgebraucht ist. Diese unerwünschten und gegebenenfalls gefährlichen Betriebszustände können mit der erfindungsgemäßen Vorgehensweise vermieden werden.

Vorteilhafte Weiterbildungen und Ausgestaltungen des erfindungsgemäßen Verfahrens ergeben sich aus abhängigen Ansprüchen.

Eine erste Ausgestaltung sieht vor, dass ein Ölverdünnungs-Signal ermittelt wird, das ein Maß für die Masse und/oder das Volumen der in das Motoröl durch die wenigstens eine Kraftstoff-Nacheinspritzung eingetragenen Ölverdünnung ist, und dass das Ölverdünnungs-Signal bei der Ermittlung des Ölstands berücksichtigt wird. Dadurch wird eine quantitative Berücksichtigung der Ölverdünnung möglich.

Eine andere Ausgestaltung sieht vor, dass ein von einem Ölsensor bereitgestelltes Ölsignal mit einem Schwellenwert für den oberen Ölstand verglichen wird und dass bei einem Überschreiten des Schwellenwerts der weiteren Ermittlung des Ölstands der obere Ölstand zugrunde gelegt wird. Hierdurch wird berücksichtigt, dass der gegebenenfalls vorhandene Ölsensor ein gültiges Ölsignal gegebenenfalls nur bis zum oberen Ölstand bereitstellt.

Eine Ausgestaltung sieht vor, dass der Berechnung des Ölstands ein erster Ölpegel zugrunde gelegt wird, der entweder fest vorgegeben ist oder der von einer Bedienperson festgelegt werden kann. Damit kann der Ölstand ermittelt werden, wenn kein Ölsensor zur Verfügung steht.

Eine Weiterbildung dieser Ausgestaltung sieht vor, dass der erste Ölpegel in Abhängigkeit von der Laufzeit oder des Laufwegs der Brennkraftmaschine auf eine hohen Wert, beispielsweise den oberen Ölstand festgelegt wird. Diese Weiterbildung erhöht die Sicherheit bei der Berechnung des Ölstands, falls vorgeschriebene Wartungsintervalle der Brennkraftmaschine nicht eingehalten werden.

Eine Ausgestaltung sieht vor, dass bei der Ölverdünnungs-Ermittlung eine Zeit berücksichtigt wird, die ein Maß für die Zeitdauer oder den Kurbelwellenwinkelbereich der wenigstens einen Kraftstoff-Nacheinspritzung angibt.

Eine andere Ausgestaltung sieht vor, dass bei der Ölverdünnungs-Ermittlung ein Kurbelwellenwinkel berücksichtigt wird, der den kurbelwellenwinkel-bezogenen oder den zeitbezogenen Kraftstoff-Einspritzbeginn der wenigstens einen Kraftstoff-Nacheinspritzung angibt.

Eine andere Ausgestaltung sieht vor, dass bei der Ölverdünnungs-Ermittlung ein Drucksignal berücksichtigt wird, das den Kraftstoffdruck in einer der Brennkraftmaschine zugeordneten Kraftstoff-Zumessvorrichtung angibt.

Eine Ausgestaltung sieht vor, dass ein von einer Ölaustrags-Ermittlung bereitgestelltes Ölaustragsstrom-Signal bei der Ermittlung der Ölverdünnung berücksichtigt wird. Mit dieser Maßnahme kann der Ölaustrag des Motoröls von der Ölverdünnung berücksichtigt werden, die insbesondere bei höheren Lasten der Brennkraftmaschine und/oder bei höherer Öltemperatur auftreten kann.

Die erfindungsgemäße Vorrichtung betrifft ein Steuergerät, in welchem der erfindungsgemäße Verfahrensablauf als Computerprogramm hinterlegt ist. Das Steuergerät enthält vorzugsweise einen Datenträger, der beispielsweise beim Hersteller oder mit Datenfernübertragung, beispielsweise über das Internet, mit dem Programm beschrieben wird.

Weitere vorteilhafte Ausgestaltungen und Weiterbildungen der erfindungsgemäßen Vorgehensweise ergeben sich aus weiteren abhängigen Ansprüchen und aus der folgenden Beschreibung.

### Zeichnung

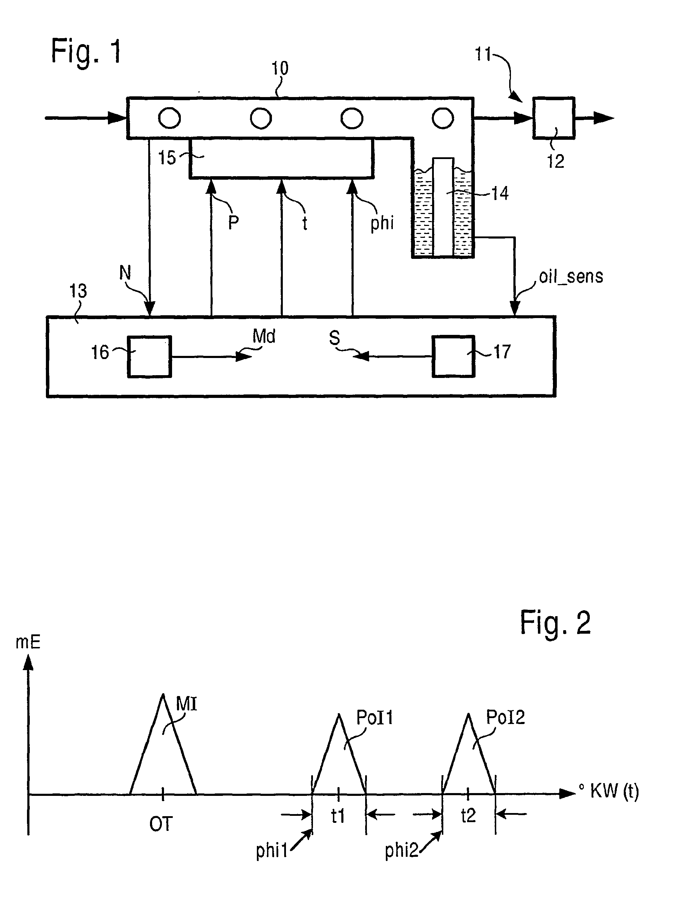

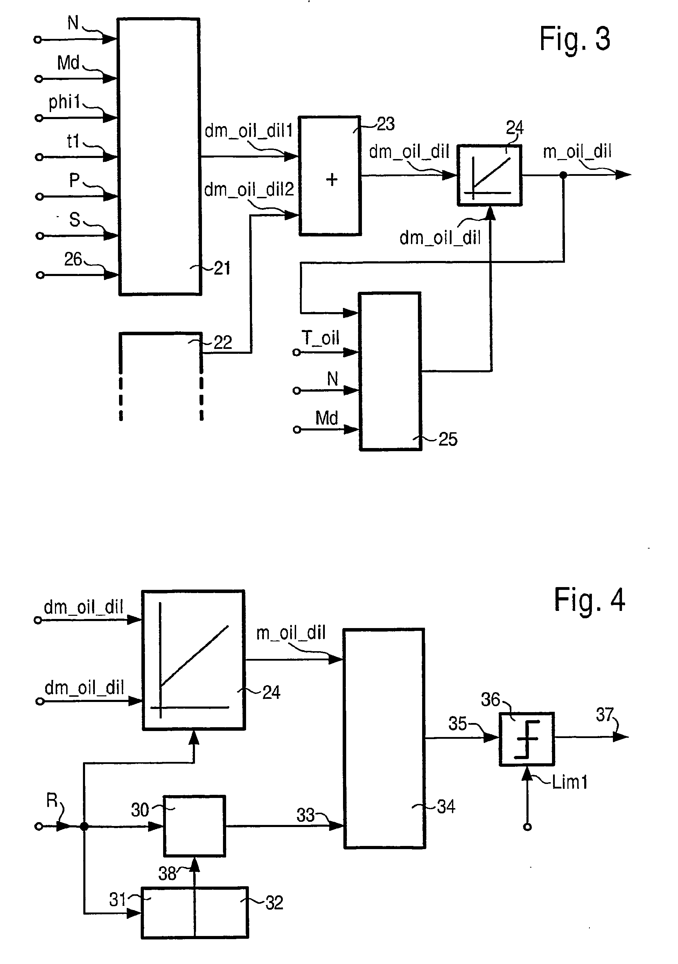

Figur 1 zeigt ein technisches Umfeld, in welchem ein erfindungsgemäßes Verfahren abläuft, Figur 2 zeigt Kraftstoff-Einspritzsignal in Abhängigkeit vom Kurbelwellenwinkel oder der Zeit, und Figuren 3 - 6 zeigen jeweils Blockschaltbilder von Signalaufbereitungen.

Figur 1 zeigt eine Brennkraftmaschine 10, in deren Abgasbereich 11 eine Abgasbehandlungsvorrichtung 12 angeordnet ist. Die Brennkraftmaschine 10 gibt an ein Steuergerät 13 ein Drehzahlsignal N ab. Die Brennkraftmaschine 10 enthält einen Ölsensor 14, welcher dem Steuergerät 13 ein Ölsignal oil_sens zur Verfügung stellt Der Brennkraftmaschine 10 ist eine Kraftstoff-Zumessvorrichtung 15 zugeordnet, die von der Steuerung 13 mit einem Drucksignal p, einem Zeitdauersignal t und einem Winkelsignal phi beaufschlagt wird.

Die Steuerung 13 enthält eine Drehmoment-Berechnung 16, die ein Maß für das Drehmoment Md der Brennkraftmaschine 10 bereitstellt. Die Steuerung 13 enthält weiterhin eine Abgasbehandlungsvorrichtungs-Statussignal-Ermittlung 17, die ein Statussignal S der Abgasbehandlungsvorrichtung 12 bereitstellt.

Das Drucksignal p, das Zeitdauersignal t sowie das Winkelsignal phi können zusammengefasst als Kraftstoff-Einspritzsignal mE bezeichnet werden, das im Detail in Figur 2 gezeigt ist. Eingetragen sind eine Kraftstoff-Haupteinspritzung MI, eine erste Kraftstoff-Nacheinspritzung PoI1 sowie eine zweite Kraftstoff-Nacheinspritzung PoI2 in Abhängigkeit vom Kurbelwellenwinkel °KW. Anstelle des Kurbelwellenwinkels °KW kann eine Abhängigkeit von der Zeit t vorgesehen sein. Wesentlich ist der örtliche/zeitliche Bezug auf den oberen Totpunkt OT eines Bezugszylinders der Brennkraftmaschine 10. Die Kraftstoff-Haupteinspritzung MI liegt im Bereich des oberen Totpunkts OT. Die erste Kraftstoff-Nacheinspritzung PoI1 beginnt bei einem ersten Kurbelwellenwinkel phi1 und die zweite Kraftstoff-Nacheinspritzung PoI2 bei einem zweiten Kurbelwellenwinkel phi2. Die erste Kraftstoff-Nacheinspritzung PoI1 weist eine erste Zeitdauer t1 und die zweite Kraftstoff-Nacheinspritzung PoI2 eine zweite Zeitdauer t2 auf.

Figur 3 zeigt eine Signalaufbereitung, die eine erste Ölverdünnungs-Ermittlung 21, eine zweite Ölverdünnungs-Ermittlung 22, einen Ölverdünnungs-Addierer 23, einen Integrator 24 sowie eine Ölaustrags-Ermittlung 25 enthält.

Der ersten Ölverdünnungs-Ermittlung 21 werden das Drehzahlsignal N, das Maß für das Drehmoment Md, der erste Kurbelwellenwinkel phi1, die erste Zeitdauer t1, das Drucksignal p, das Statussignal S sowie weitere erste Eingangssignale 26 zur Verfügung gestellt. Die erste Ölverdünnungs-Ermittlung 21 gibt ein erstes Ölverdünnungsstrom-Signal dm_oil_dil1 an den Ölverdünnungs-Addierer 23 ab.

Der Ölverdünnungs-Addierer 23 erhält von der nicht näher gezeigten zweiten Ölverdünnungs-Ermittlung 22 ein zweites Ölverdünnungsstrom-Signal dm_oil_dil2 zugeführt. Der Ölverdünnungs-Addierer 23 gibt ein drittes Ölverdünnungsstrom-Signal dm_oil_dil an den Integrator 24 ab, dem die Ölaustrags-Ermittlung 25 ein Ölaustragsstrom-Signal -dm_oil_di1 zur Verfügung stellt. Der Integrator 24 stellt ein Ölverdünnungs-Signal m_oil_dil bereit.

Der Ölaustrags-Ermittlung 25 werden das Ölverdünnungs-Signal m_oil_dil, ein Öltemperatur-Signal T_oil, das Drehzahlsignal N sowie das Maß für das Drehmoment Md zur Verfügung gestellt.

In Figur 4 ist der Integrator 24 gezeigt, dem ein Resetsignal R zugeführt wird, das weiterhin einer Pegelvorgabe 30, einer Laufzeit-Ermittlung 31 sowie einer Laufweg-Ermittlung 32 zur Verfügung gestellt wird. Das vom Integrator 24 bereitgestellte Ölverdünnungs-Signal m_oil_dil sowie ein von der Pegelvorgabe 30 bereitgestellter erster Ölpegel 33 werden einem Addierer 34 zur Verfügung gestellt, der ein Ölstands-Signal 35 an einen ersten Vergleicher 36 abgibt, der das Ölstands-Signal 35 mit einem ersten Schwellenwert Lim1 vergleicht und in Abhängigkeit vom Vergleichsergebnis ein erstes Warnsignal 37 bereitstellt. Die Laufzeit-Ermittlung 31 oder die Laufwegs-Ermittlung 32 gibt ein Änderung-Signal 38 an die Pegelvorgabe 30 ab.

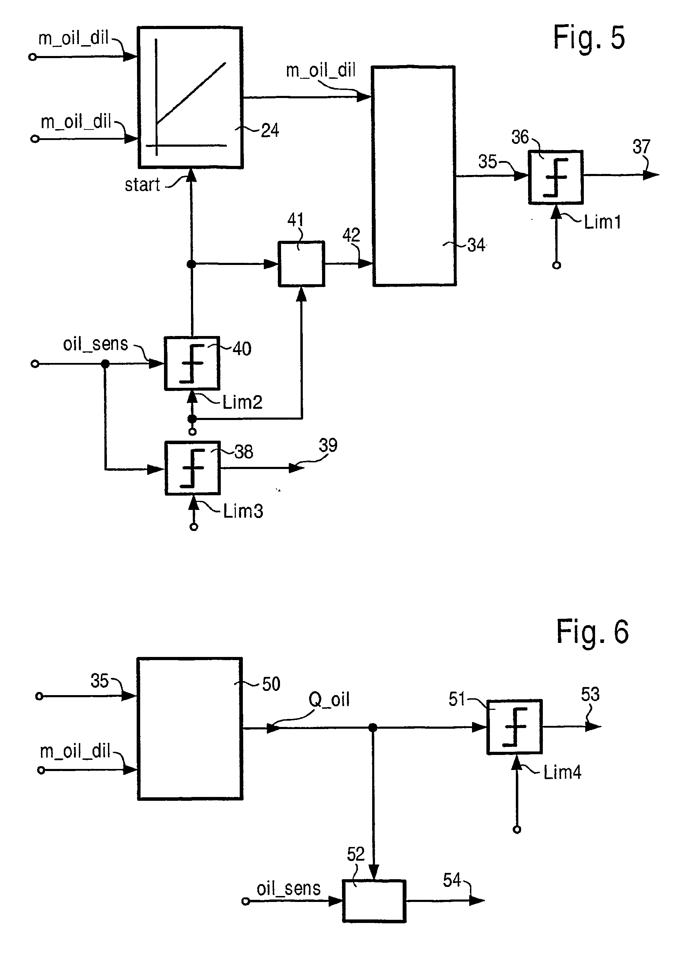

In Figur 5 ist ebenfalls der Integrator 24 gezeigt, dem ein Startsignal st zugeführt wird, das ein zweiter Vergleicher 40 anhand eines Vergleichs des Ölsignals oil_sens mit einem zweiten Schwellenwert Lim2 gegebenenfalls bereitstellt. Das Statussignal st wird weiterhin einer Freigabeanordnung 41 zur Verfügung gestellt. Der Addierer 34 addiert das Ölverdünnungs-Signal m_oil_dil und einen zweiten Ölpegel 42, den die Freigabeanordnung 41 bereitstellt. Das vom Addierer 34 bereitgestellte Ölstands-Signal 35 wird wieder im ersten Vergleicher 36 mit dem ersten Schwellenwert Lim1 verglichen, der in Abhängigkeit vom Vergleichsergebnis das erste Warnsignal 37 bereitstellt.

Das Ölsignal oil_sens wird weiterhin einem dritten Vergleicher 38 zur Verfügung gestellt, der das Ölsignal oil_sens mit einem dritten Schwellenwert Lim3 vergleicht und in Abhängigkeit vom Vergleichsergebnis ein zweites Warnsignal 39 bereitstellt.

Figur 6 zeigt eine Verhältnis-Ermittlung 50, der das Ölverdünnungs-Signal m_oil_dil sowie das Ölstands-Signal 35 zur Verfügung gestellt werden. Die Verhältnis-Ermittlung 50 gibt ein Ölqualitäts-Signal Q_oil aus, das sowohl einem vierten Vergleicher 51 als auch einem fünften Vergleicher 52 zur Verfügung gestellt wird. Der vierte Vergleicher 51 vergleicht das Ölqualitäts-Signal Q_oil mit einem vierten Schwellenwert Lim4 und stellt in Abhängigkeit vom Vergleichsergebnis ein drittes Warnsignal 53 bereit. Der fünfte Vergleicher 52 vergleicht das Ölqualitäts-Signal 72 mit dem Ölsignal oil_sens und stellt in Abhängigkeit vom Vergleichsergebnis ein viertes Warnsignal 54 zur Verfügung.

Das erfindungsgemäße Verfahren arbeitet folgendermaßen:

Die Drehmomentermittlung 16 legt zumindest in Abhängigkeit von einem nicht näher gezeigten Eingangssignal, das einem Wunsch-Drehmoment der Brennkraftmaschine 10 entspricht, das Maß für das Drehmoment Md der Brennkraftmaschine 10 fest. Das Drehzahlsignal N sowie das Maß für das Drehmoment Md spiegeln einzelnen oder insbesondere zusammen den Lastzustand der Brennkraftmaschine 10 wider. Zur Einstellung des Maßes für das Drehmoment Md der Brennkraftmaschine 10 legt die Steuerung 13 das Drucksignal p, das Zeitdauersignal t sowie das Winkelsignal phi für die Kraftstoff-Zumessvorrichtung 15 in Abhängigkeit von einem im Steuergerät 13 hinterlegten Programm fest.

Im Abgasbereich 11 der Brennkraftmaschine 10 ist die Abgasbehandlungsvorrichtung 12 angeordnet, die beispielsweise wenigstens einen Katalysator und/oder wenigstens ein Partikelfilter enthält. In bestimmten Betriebszuständen der Abgasbehandlungsvorrichtung 12 kann eine Erhöhung der Betriebstemperatur der Abgasbehandlungsvorrichtung 12 erforderlich sein. Solche Betriebszustände sind beispielsweise eine erforderliche Reinigung der Abgasbehandlungsvorrichtung 12 von eingelagerten unerwünschten Abgaskomponenten im Rahmen einer Regeneration der Abgasbehandlungsvorrichtung 12. Die Abgasbehandlungsvorrichtungs-Statussignal-Ermittlung 17 stellt das Statussignal S zumindest dann bereit, wenn eine Erhöhung der Betriebstemperatur erforderlich ist.

Im gezeigten Ausführungsbeispiel wird die Temperaturerhöhung der Abgasbehandlungsvorrichtung 12 durch wenigstens eine Kraftstoff-Nacheinspritzung PoI1, PoI2 erreicht. Die wenigstens eine Kraftstoff-Nacheinspritzung PoI1, PoI2 bringt den Kraftstoff als Brennstoff in den Abgasbereich 11. Der Brennstoff kann auf einer katalytisch wirkenden Fläche, die entweder unmittelbar in der Abgasbehandlungsvorrichtung 12 vorhanden ist oder stromaufwärts vor der Abgasbehandlungsvorrichtung 12 angeordnet ist, exotherm reagieren. Sofern die katalytisch wirksame Fläche in der Abgasbehandlungsvorrichtung 12 vorhanden ist, wird die Abgasbehandlungsvorrichtung 12 direkt erwärmt. Sofern die katalytisch wirksame Fläche vor der Abgasbehandlungsvorrichtung 12 angeordnet ist, wird die Abgasbehandlungsvorrichtung 12 indirekt durch das erwärmte Abgas beheizt.

Der in den Abgasbereich 11 durch die wenigstens eine Kraftstoff-Nacheinspritzung PoI1, PoI2 eingebrachte Brennstoff kann auch durch Einbringung von Sekundärluft unter Ausbildung eines Thermoreaktor-Bereichs exotherm reagieren und somit zu einer Erhöhung der Abgastemperatur beitragen.

Das Drucksignal p, das Zeitdauersignal t sowie das Winkelsignal phi bilden zusammen das Kraftstoff-Einspritzsignal mE, das in Figur 2 näher gezeigt ist. Im Bereich des oberen Totpunkts OT eines Bezugszylinders der Brennkraftmaschine 10 ist die Haupteinspritzung MI eingetragen, bei welcher der eingespritzte Kraftstoff normalerweise vollständig verbrennt und zur Erzeugung des Drehmoments der Brennkraftmaschine 10 umgesetzt wird. Die Lage der Haupteinspritzung MI kann erheblich vom oberen Totpunkt OT abweichen.

Vorgesehen ist eine erste Kraftstoff-Nacheinspritzung PoI1, die beim ersten Kurbelwellenwinkel phi1 beginnt und die erste Zeitdauer t1 aufweisen soll. In Figur 2 ist bereits angedeutet, dass der Kurbelwellenwinkel °KW durch die Zeit t ersetzt werden kann, wobei die Zeit t ebenfalls auf den oberen Totpunkt OT zu beziehen ist. Ebenso kann die erste Zeitdauer t1 anstelle in Zeiteinheiten in Einheiten des Kurbelwellenwinkels °KW angegeben werden.

Bei der ersten Kraftstoff-Nacheinspritzung PoI1 handelt es sich beispielsweise um eine nachgelagerte Kraftstoff-Nacheinspritzung, die einerseits noch zum normalen Betrieb der Brennkraftmaschine 10 aber andererseits bereits zum Beheizen der Abgasbehandlungsvorrichtung 12 vorgesehen sein kann. Die erste Kraftstoff-Nacheinspritzung PoI1 kann deshalb derart festgelegt werden, dass der eingespritzte Kraftstoff entweder noch weitgehend verbrennt oder nur noch teilweise verbrennt, sodass wenigstens ein Teil des Kraftstoffs als Brennstoff in den Abgasbereich 11 gelangt.

Weiterhin kann gegebenenfalls die zweite Kraftstoff-Nacheinspritzung PoI2 vorgesehen sein. Die zweite Kraftstoff-Nacheinspritzung PoI2 beginnt beim zweiten Kurbelwellenwinkel phi2 oder eine vorgegebene Zeit nach dem oberen Totpunkt OT. Anstelle der zweiten Zeitdauer t2 der zweiten Kraftstoff-Nacheinspritzung PoI2 kann ebenfalls ein Kurbelwellenwinkelbereich vorgegeben werden. Allgemein legen die Zeitdauern t1, t2 in Verbindung mit dem Drucksignal p die im Rahmen der Kraftstoff-Nacheinspritzungen PoI1, PoI2 eingespritzte Kraftstoffmenge fest.

Das Drucksignal p legt den in der Kraftstoff-Zumessvorrichtung 15 einzustellenden Druck des Kraftstoffs fest. Das Drucksignal p und die Zeitdauer t1, t2 bestimmen die bei den einzelnen Kraftstoff-Einspritzvorgängen in die Brennkraftmaschine 10 eingespritzte Kraftstoffmenge.

Bei der zweiten Nacheinspritzung PoI2 handelt es sich um eine späte Kraftstoff-Nacheinspritzung, bei welcher der Kraftstoff in den Zylindern der Brennkraftmaschine 10 nicht mehr verbrennt und weitgehend als Brennstoff in den Abgasbereich 11 gelangt. Gegebenenfalls können weitere Kraftstoff-Nacheinspritzungen vorgesehen sein.

Die Kraftstoff-Nacheinspritzungen PoI1, PoI2 können dazu führen, dass der nicht vollständig verbrannte Kraftstoff an den Brennräumen der einzelnen Zylinder der Brennkraftmaschine 10 zumindest teilweise kondensiert, als Ölverdünnungsstrom an den Zylinderwänden herabläuft und ins Motoröl gelangt. Die dadurch verursachte Ölverdünnung führt zum Einen zu einer Veränderung des Ölstands und zum Anderen zu einer Veränderung der Ölqualität.

Der Integrator 24 stellt das Ölverdünnungs-Signal m_oil_dil bereit, das ein Maß für die durch die wenigstens eine Kraftstoff-Nacheinspritzung PoI1, PoI2 entstehenden Ölverdünnung ist. Hierbei kann es sich um die Masse oder das Volumen der Ölverdünnung handeln.

Zunächst wird in der ersten Ölverdünnungs-Ermittlung 21 das erste Ölverdünnungsstrom-Signal dm_oil_dil1 ermittelt. Analog dazu wird in der zweiten Ölverdünnungs-Ermittlung 22 das zweite Ölverdünnungsstrom-Signal dm_oil_dil2 ermittelt. Als Eingangssignale sind jeweils das Drehzahlsignal N, das Maß für das Drehmoment Md, der erste Kurbelwellenwinkel phi1, die Zeitdauer t1, t2, das Drucksignal p, das Statussignal S sowie wenigstens das weitere Eingangssignal 26 vorgesehen.

Durch die Berücksichtigung des Drehzahlsignals N und/oder des Maßes für das Drehmoment Md wird ein Maß für den Lastzustand der Brennkraftmaschine 10 berücksichtigt.

Einen wesentlichen Einfluss auf die Ölverdünnung hat der Zeitpunkt bzw. der Kurbelwellenwinkel phi1, phi2, bei welchem die wenigstens eine Kraftstoff-Nacheinspritzung PoI1, PoI2 beginnt. Weiterhin wesentlich ist die Menge des Kraftstoffs, die im Rahmen der Kraftstoff-Nacheinspritzung PoI1, PoI2 der Brennkraftmaschine 10 zugeführt wird. Die Menge ergibt sich aus dem Drucksignal p sowie der Zeitdauer t1, t2.

Als weiteres Eingangssignal 26 kann beispielsweise die der Temperatur der Brennkraftmaschine 10 näherungsweise entsprechende Kühlwassertemperatur und/oder beispielsweise die Öltemperatur vorgesehen sein.

Die Ölverdünnungs-Ermittlungen 21, 22 ermitteln die Ölverdünnungsstrom-Signale dm_oil_dil1, dm_oil_dil2 anhand von Tabellen und/oder Kennlinien und/oder Kennfeldern, die vorzugsweise bei der Applikation vor der Inbetriebnahme der Brennkraftmaschine 10 ermittelt und in den Ölverdünnungs-Ermittlungen 21, 22 hinterlegt wurden.

Der Ölverdünnungs-Addierer 23 addiert die Ölverdünnungsstrom-Signale dm_oil_dil1, dm_oil_dil2 zum dritten Ölverdünnungsstrom-Signal dm_oil_dil, das den gesamten Ölverdünnungsstrom widerspiegelt. Der Integrator 24 ermittelt aus dem dritten Ölverdünnungsstrom-Signal dm_oil_dil das Ölverdünnungs-Signal m_oil_dil, welches der ab einem vorgegebenen Startzeitpunkt insgesamt in das Motoröl eingetragenen Ölverdünnung entspricht. Hierbei kann es sich um die Masse und/oder das Volumen der Ölverdünnung handeln.

Die Brennkraftmaschine 10 kann Betriebszustände aufweisen, in denen die Ölverdünnung abnimmt. Das kann darauf beruhen, dass die im Wesentlichen aus Kraftstoff bestehende Ölverdünnung einen höheren Dampfdruck und eine niedrigere Siedetemperatur als das Motoröl aufweist. Insbesondere bei erhöhter Öltemperatur und/oder bei höheren Lasten der Brennkraftmaschine 10 kann die Ölverdünnung durch ein Ausgasen aus dem Motoröl stattfinden. Die Ölverdünnung kann über ein mit dem Ansaugbereich der Brennkraftmaschine 10 verbundenes, nicht näher gezeigtes Entlüftungsrohr der Brennkraftmaschine 10 wieder als Kraftstoff zugeführt werden.

Der Ölaustrags-Ermittlung 25 werden das Drehzahlsignal N und/oder das Maß für das Drehmoment Md der Brennkraftmaschine 10 zur Verfügung gestellt. Zumindest aus einem, vorzugsweise aus beiden Signalen N, Md ergibt sich der Lastzustand der Brennkraftmaschine 10.

Sofern der Ölsensor 14 das Ölsignal oil_sens in Abhängigkeit von der Öltemperatur bereitstellt, kann der Ölaustrags-Ermittlung 25 ein entsprechendes Öltemperatur-Signal T_oil angeboten werden. Die Ölaustrags-Ermittlung 25 ermittelt das Ölaustragsstrom-Signal -dm_oil_dil, welches negatives Vorzeichen aufweist, ebenfalls anhand von hinterlegten Tabellen und/oder Kennlinien und/oder Kennfeldern, die ebenfalls vorzugsweise bei der Applikation vor der Inbetriebnahme der Brennkraftmaschine 10 ermittelt und in der Ölaustrags-Ermittlung 25 hinterlegt wurden. Das negative Vorzeichen des Ölaustragsstrom-Signals -dm_oil_dil sorgt dafür, dass die Integration im Integrator 24 zu einer Verminderung des Ölverdünnungs-Signals m_oil_dil führt.

Ziel ist es, wenigstens ein Maß für den Ölstand des Motoröls in der Brennkraftmaschine 10 zu ermitteln. Vorteilhafterweise wird die durch die wenigstens eine Kraftstoff-Nacheinspritzung PoI1, PoI2 bedingte Ölverdünnung berücksichtigt. Die erfindungsgemäße Vorgehensweise weist insbesondere Vorteile auf, wenn der Ölsensor 14 nicht vorhanden ist. Aber auch bei vorhandenem Ölsensor 14 werden mit der erfindungsgemäßen Vorgehensweise erhebliche Vorteile erzielt, insbesondere dann, wenn der obere Ölstand - und somit der Messbereich des Ölsensors 14 - überschritten wird.

Die in Figur 4 gezeigte Signalermittlung ist darauf abgestimmt, das Ölstands-Signal 35 ohne Einbeziehung des Ölsignals oil_sens zu ermitteln. Der Ölsensor 14 wird daher nicht benötigt. Im Rahmen eines Service der Brennkraftmaschine 10, bei dem ein Ölwechsel durchführt wird, erfolgt mit dem Resetsignal R die Vorgabe eines definierten Ölstands. Sofern beim Ölwechsel stets dieselbe Ölmenge eingefüllt wird, kann der erste Ölpegel 33 in der Pegelvorgabe 30 fest auf einen bestimmten Wert eingestellt sein. In einer Ausgestaltung kann der mit der Pegelvorgabe 30 vorzugebende erste Ölpegel 33 variabel ausgestaltet sein, den eine Bedienperson über ein nicht näher gezeigtes Servicegerät anhand der eingefüllten Ölmenge eingeben kann. Die Umrechnung von der eingefüllten Ölmenge in den ersten Ölpegel 33 kann in der Pegelvorgabe 30 durchgeführt werden.

Mit dem Resetsignal R wird der Integrator 24 in einen Anfangszustand zurückgesetzt, bei dem das Ölverdünnungs-Signal m_oil_dil auf null gesetzt wird. Ausgehend von diesen Zustand stellt der Integrator 24 mit dem Ölverdünnungs-Signal m_oil_dil im weiteren Verlauf ein erstes Signal bereit, das den sich ändernden Ölstand widerspiegelt. Weiterhin kann die Pegelvorgabe 30 in Abhängigkeit von der Laufzeit oder in Abhängigkeit vom Laufweg der Brennkraftmaschine 10 einen Ölverbrauch der Brennkraftmaschine 10 durch eine Verminderung des ersten Ölpegels 32 während der Betriebszeit der Brennkraftmaschine 10 simulieren. Die Pegelvorgabe 30 wird hierzu vom Änderung-Signal 38 der Laufzeit-Ermittlung 31 oder der Laufweg-Ermittlung 32 entsprechend angesteuert. Der Laufweg der Brennkraftmaschine 10 kann beispielsweise durch die Zählung von Drehzahlimpulsen erfolgen, die das Drehzahlsignal N enthält.

In einer vorteilhaften Ausgestaltung gibt die Laufzeit-Ermittlung 31 oder die Laufweg-Ermittlung 32 nach dem Ablauf entweder einer vorgegebenen Laufzeit oder eines Laufwegs das Änderung-Signal 38 an die Pegelvorgabe 30 ab, welche die Pegelvorgabe 30 dazu veranlasst, einen ersten Ölpegel 33 auszugeben, der beispielsweise dem oberen Ölstand entspricht. Diese Ausgestaltung kann insbesondere vorgesehen sein, wenn der Betreiber der Brennkraftmaschine 10 ein Wartungsintervall überschritten hat.

Der Addierer 34 addiert das Ölverdünnungs-Signal m_oil_dil und den ersten Ölpegel 33 zum Ölstands-Signal 35, welches im ersten Vergleich 36 mit dem vorgegebenen ersten Schwellenwert Lim1 verglichen wird. Der erste Schwellenwert Lim1 entspricht dem maximal möglichen Ölstand. Ein Überschreiten des maximal möglichen Ölstands kann unter Umständen zu einem Ansaugen des Öls durch die Ölentlüftung führen, die mit dem Ansaugbereich der Brennkraftmaschine 10 verbunden ist. In diesem Betriebszustand kann nicht ausgeschlossen werden, dass der Brennkraftmaschine 10 als Kraftstoff wirkendes Öl zusätzlich zugeführt wird, das von der Steuerung 13 nicht beeinflusst oder berücksichtigt werden kann. Unter ungünstigen Umständen kann eine ungewollte Erhöhung des Drehmoments der Brennkraftmaschine auftreten. Sofern es sich um eine selbstzündende Brennkraftmaschine 10 handelt, kann unter ungünstigen Umständen der Fall auftreten, dass die Brennkraftmaschine 10 nach einem Abschalten durch die Steuerung 13 sogar weiterläuft, bis das angesaugte überschüssige Öl verbrannt ist.

Wenn der erste Vergleicher 36 eine Überschreitung des auf den maximal möglichen Ölstand festgelegten ersten Schwellenwerts Lim1 feststellt, wird das erste Warnsignal 37 bereitgestellt, das beispielsweise angezeigt werden kann und/oder Eingriffe in der Steuerung 13 vornimmt, die eine weitere Erhöhung des Ölstands verhindern. Beispielsweise kann in die einzelnen Kenngrößen der ersten und/oder zweiten Kraftstoff-Nacheinspritzung PoI1, PoI2 eingegriffen werden.

Eine andere Ausgestaltung der Signalermittlung, die das vom Ölsensor 14 bereitgestellte Ölsignal oil_sens einbindet, ist in Figur 5 gezeigt.

Unterhalb des oberen Ölstands soll die in Figur 5 gezeigte Signalermittlung lediglich das zweite Warnsignal 39 bereitstellen, das der dritte Vergleicher 38 in Abhängigkeit von einem Vergleich des Ölsignals oil_sens mit dem dritten Schwellenwert Lim3 ermittelt. Der dritte Schwellenwert Lim3 ist auf einen unteren Ölstand festgelegt. Eine Unterschreitung des unteren Ölstands führt mit dem zweiten Warnsignal 39 zu einem Warnhinweis auf den drohenden Ölmangel. Gegebenenfalls kann das zweite Warnsignal 39 in einen Fehlerspeicher hinterlegt werden.

Der zweite Vergleicher 40 vergleicht das vom Ölsensor 14 bereitgestellte Ölsignal oil_sens mit dem zweiten Schwellenwert Lim2, der auf den oberen Ölstand festgelegt wird. Die weiteren Abläufe finden nur statt, wenn der zweite Vergleicher 40 feststellt, dass das Ölsignal oil_sens den zweiten Schwellenwert Lim2 überschritten hat, der vorzugsweise auf den oberen Ölstand festgelegt ist. Nach einem Überschreiten des Ölsensor-Messbereichs ist nicht mehr sichergestellt, dass das Ölsignal oil_sens den tatsächlichen Ölstand widerspiegelt. In dieser Betriebssituationen wird deshalb das Ölstands-Signal 35 berechnet.

Nach dem Überschreiten des oberen Ölstands gibt der zweite Vergleicher 40 das Startsignal st an den Integrator 24 und an die Freigabeanordnung 41 ab. Der Integrator 24 startet mit der Ermittlung des Ölverdünnungs-Signals m_oil_dil ausgehend vom Wert null. Die Freigabeanordnung 41 dient dazu, den zweiten Schwellenwert Lim2, der vorzugsweise dem oberen Ölstand entspricht, als zweiten Ölpegel 42 an den Addierer 34 durchzuschalten. Der Addierer 34 stellt das Ölstands-Signal 35 solange bereit, bis das Ölsignal oil_sens den zweiten Schwellenwert Lim2 wieder unterschreitet. Solange dies nicht der Fall ist, wird das Ölstands-Signal 35 im ersten Vergleicher 36 mit dem ersten Schwellenwert Lim1 verglichen, der auf den maximal möglichen Ölstand festgelegt ist.

Die in Figur 6 gezeigte Signalermittlung ermittelt ein Maß für die Ölqualität. Das Ölqualitäts-Signal Q_oil, das ein Maß für die Ölqualität sein soll, wird in der Verhältnis-Ermittlung 50 beispielsweise aus dem Quotienten des Ölverdünnungs-Signals m_oil_dil und der gesamten Ölmenge berechnet, die aus dem Ölstands-Signal 35 und dem Ölverdünnungs-Signal m_oil_dil abgeleitet werden kann. Das Ölqualitäts-Signal Q_oil gibt bei dieser Ausgestaltung den prozentualen Anteil der Ölverdünnung an der gesamten Ölmenge wieder. Das Ölqualitäts-Signal Q_oil wird im vierten Vergleicher 51 mit dem vierten Schwellenwert Lim4 verglichen. Wenn die Ölqualität den vierten Schwellenwert Lim4 unterschreitet, stellt der vierte Vergleicher 51 das dritte Warnsignal 53 bereit, das angezeigt und/oder in einen Fehlerspeicher hinterlegt werden kann.

Wenn das vom Ölsensor 14 bereitgestellte Ölsignal oil_sens zusätzlich ein Maß für die gemessene Ölqualität enthält, kann die Plausibilität des berechneten Ölqualitäts-Signals Q_oil anhand des gemessenen Ölsignals oil_sens bzw. umgekehrt geprüft werden. Bei der Ölqualität handelt es sich beispielsweise um die Viskosität. Die Prüfung erfolgt im fünften Vergleicher 52, der in Abhängigkeit von Vergleichsergebnis das vierte Warnsignal 54 bereitstellt. Das vierte Warnsignal 54 signalisiert ein Abweichen zwischen der gemessenen und der berechneten Ölqualität, das gegebenenfalls auf einen Defekt des Ölsensor oil_sens schließen lässt.

## Patentansprüche

1. Verfahren zum Betreiben einer Brennkraftmaschine (10), bei dem wenigstens eine Kraftstoff-Nacheinspritzung (PoI1, PoI2) vorgenommen wird, **dadurch gekennzeichnet, dass** wenigstens ein Maß für den Ölstand des Motoröls der Brennkraftmaschine (10) ermittelt wird, dass ein erster Schwellenwert (Lim1) für den maximal möglichen Ölstand vorgegeben wird und dass bei einem Überschreiten des ersten Schwellenwerts (Lim1) ein erstes Warnsignal (37) bereitgestellt wird.

2. Verfahren nach Anspruch 1, **dadurch gekennzeichnet, dass** ein Ölverdünnungs-Signal (m_oil_dil) ermittelt wird, das ein Maß für die Masse und/oder das Volumen der in das Motoröl der Brennkraftmaschine (10) durch die wenigstens eine Kraftstoff-Nacheinspritzung (PoI1, PoI2) eingetragenen Ölverdünnung ist, und dass das Ölverdünnungs-Signal (m_oil_dil) bei der Ermittlung des Ölstands berücksichtigt wird.

3. Verfahren nach Anspruch 1 oder 2, **dadurch gekennzeichnet, dass** ein von einem Ölsensor (14) bereitgestelltes Ölsignal (oil_sens) mit einem zweiten Schwellenwert (Lim2) verglichen wird, der einem vorgegebenen, vorzugsweise einem oberen Ölstand entspricht, und dass bei einem Überschreiten des zweiten Schwellenwerts (Lim2) bei der weiteren Ermittlung des Ölstands vom vorgegebenen Ölstand ausgegangen wird.

4. Verfahren nach Anspruch 2, **dadurch gekennzeichnet, dass** mit einem Erreichen einer vorgegebenen Betriebsdauer oder eines vorgegebenen Laufwegs der Brennkraftmaschine (10) nach dem Auftreten eines Startsignals (st) bei der weiteren Ermittlung des Ölstands von einem vorgegebenen, vorzugsweise einem oberen Ölstand ausgegangen wird.

5. Verfahren nach Anspruch 2, **dadurch gekennzeichnet, dass** bei der Ermittlung der Ölverdünnung ein Kurbelwellenwinkel (phil, phi2) berücksichtigt wird, der den kurbelwellenwinkel-bezogenen oder den zeitbezogenen Kraftstoff-Einspritzbeginn der wenigstens einen Kraftstoff-Nacheinspritzung (PoI1, PoI2) angibt.

6. Verfahren nach Anspruch 2 oder 5, **dadurch gekennzeichnet, dass** bei der Ermittlung der Ölverdünnung eine Zeitdauer (t1, t2) berücksichtigt wird, die ein Maß für die Zeitdauer oder den Kurbelwellenwinkelbereich der wenigstens einen Kraftstoff-Nacheinspritzung (PoI1, PoI2) angibt.

7. Verfahren nach Anspruch 2 oder 5 oder 6, **dadurch gekennzeichnet, dass** bei der Ermittlung der Ölverdünnung ein Maß für die mit der wenigstens einen Kraftstoff-Nacheinspritzung (PoI1, PoI2) der Brennkraftmaschine (10) zugeführten Kraftstoffmenge berücksichtigt wird.

8. Verfahren nach Anspruch 2, **dadurch gekennzeichnet, dass** eine Ölaustrags-Ermittlung (25) ein Ölverdünnungsstrom-Signal (-dm_oil_dil) bereitstellt, das ein Maß für die Verminderung der Ölverdünnung angibt.

9. Verfahren nach Anspruch 2, **dadurch gekennzeichnet, dass** aus dem Ölstand und dem Ölverdünnungs-Signal (m_oil_dil) ein Qualitäts-Signal (Q_oil) als ein Maß für die Ölgüte ermittelt wird.

10. Vorrichtung zur Durchführung des Verfahrens nach einem der vorhergehenden Ansprüche, **dadurch gekennzeichnet, dass** ein Steuergerät (13) vorgesehen ist, welches das Verfahren als Programmablauf enthält

## Claims

1. Method for operating an internal combustion engine (10), in which method at least one fuel post-injection (PoI1, PoI2) is carried out, **characterized in that** at least one measure for the oil level of the engine oil of the internal combustion engine (10) is determined, **in that** a first threshold value (Lim1) for the maximum possible oil level is predefined, and **in that** a first warning signal (37) is provided in the event of the first threshold value (Lim1) being exceeded.

2. Method according to Claim 1, **characterized in that** an oil dilution signal (m_oil_dil) is determined which is a measure for the mass and/or the volume of the oil dilution introduced into the engine oil of the internal combustion engine (10) by the at least one fuel post-injection (PoI1, PoI2), and **in that** the oil dilution signal (m_oil_dil) is taken into consideration in the determination of the oil level.

3. Method according to Claim 1 or 2, **characterized in that** an oil signal (oil_sens) provided by an oil sensor (14) is compared with a second threshold value (Lim2) which corresponds to a predefined, preferably upper oil level, and **in that**, in the event of the second threshold value (Lim2) being exceeded, the predefined oil level is taken as a basis for the further determination of the oil level.

4. Method according to Claim 2, **characterized in that**, once a predefined operating duration or a predefined running distance of the internal combustion engine (10) has elapsed after the occurrence of a start signal (st), a predefined, preferably upper oil level is taken as a basis for the further determination of the oil level.

5. Method according to Claim 2, **characterized in that** in the determination of the oil dilution, a crankshaft angle (phil, phi2) is taken into consideration which indicates the crankshaft-angle-related or the time-related start of fuel injection of the at least one fuel post-injection (PoI1, PoI2).

6. Method according to Claim 2 or 5, **characterized in that,** in the determination of the oil dilution, a time duration (t1, t2) is taken into consideration which indicates a measure for the time duration or the crankshaft angle range of the at least one fuel post-injection (PoI1, PoI2).

7. Method according to Claim 2 or 5 or 6, **characterized in that** a measure for the fuel quantity supplied by means of the at least one fuel post-injection (PoI1, PoI2) of the internal combustion engine (10) is taken into consideration in the determination of the oil dilution.

8. Method according to Claim 2, **characterized in that** an oil discharge determination (25) provides an oil dilution flow signal (-dm_oil_dil) which indicates a measure for the reduction in the oil dilution.

9. Method according to Claim 2, **characterized in that** a quality signal (Q_oil) is determined, as a measure for the oil quality, from the oil level and the oil dilution signal (m_oil_dil).

10. Device for carrying out the method according to one of the preceding claims, **characterized in that** a control unit (13) is provided which comprises the method as a program sequence.

## Revendications

1. Procédé de gestion d'un moteur à combustion interne (10) selon lequel on effectue au moins une post-injection de carburant (PoI1, PoI2),
**caractérisé en ce qu'**
on détermine au moins une mesure du niveau d'huile dans le moteur à combustion interne (10),
on prédéfinit une première valeur de seuil (Lim1) du niveau d'huile maximum possible, et
en cas de dépassement de la première valeur de seuil (Lim1) on émet un premier signal avertisseur (37).

2. Procédé selon la revendication 1,
**caractérisé en ce qu'**
on détermine un signal de dilution d'huile (m_oil_dil), qui est une mesure de la masse et/ou du volume de la dilution d'huile introduite dans l'huile moteur du moteur à combustion interne (10) par au moins une post-injection de carburant (PoI1, PoI2), et
on tient compte du signal de dilution d'huile (m_oil_dil) pour déterminer le niveau d'huile.

3. Procédé selon la revendication 1 ou 2,
**caractérisé en ce qu'**
on compare un signal d'huile (oil-sens) fourni par un capteur d'huile (14) à une seconde valeur de seuil (Lim2) qui correspond à un niveau d'huile prédéfini, de préférence un niveau d'huile supérieur, et
en cas de dépassement de la seconde valeur de seuil (Lim2), on utilise le niveau d'huile prédéfini pour la suite de la détermination du niveau d'huile.

4. Procédé selon la revendication 2,
**caractérisé en ce que**
lorsqu'on atteint une durée de fonctionnement prédéfinie ou un parcours prédéfini avec le moteur à combustion interne (10), après l'arrivée d'un signal de démarrage (st), pour la suite de la détermination du niveau d'huile, on utilise un niveau d'huile prédéfini de préférence le niveau d'huile supérieur.

5. Procédé selon la revendication 2,
**caractérisé en ce que**
pour déterminer la dilution d'huile, on tient compte d'un angle de vilebrequin (phil, phi2), qui indique le début d'une injection de carburant pour au moins une post-injection de carburant (PoI1, PoI2) rapportée à l'angle du vilebrequin ou rapportée au temps.

6. Procédé selon la revendication 2 ou 5,
**caractérisé en ce que**
pour déterminer la dilution de l'huile, on tient compte d'une durée (t1, t2) qui est une mesure de la durée ou de la plage d'angle de vilebrequin pour au moins une post-injection de carburant (PoI1, PoI2).

7. Procédé selon les revendications 2, 5 ou 6,
**caractérisé en ce qu'**
en déterminant la dilution de l'huile, on tient compte d'une mesure de la quantité de carburant fournie par au moins une post-injection de carburant (PoI1, PoI2) dans le moteur à combustion interne (10).

8. Procédé selon la revendication 2,
**caractérisé en ce qu'**
un moyen de détermination de sortie d'huile (25) fournit un signal de courant de dilution d'huile (dm_oil_dil), qui donne une mesure de la diminution de la dilution d'huile.

9. Procédé selon la revendication 2,
**caractérisé en ce qu'**
à partir du niveau d'huile et du signal de dilution d'huile (m_oil_dil), on détermine un signal de qualité (Q_oil) comme mesure de la qualité de l'huile.

10. Dispositif pour la mise en oeuvre du procédé selon les revendications précédentes,
**caractérisé par**
un appareil de commande (13) comportant le procédé sous la forme d'un programme à exécuter.
